# EUROPEAN PATENT APPLICATION

(11) **EP 4 199 148 A1**
(43) Date of publication of application: **21.06.2023**
(21) Application number: 22736890.9
(22) Date of filing: 07.01.2022
(51) Int. Cl.: H01M 4/36, H01M 4/38, H01M 4/62, H01M 10/052, H01M 4/02

(54) **SULFUR-CARBON COMPOSITE, METHOD FOR PREPARING SAME, AND LITHIUM-SULFUR BATTERY INCLUDING SAME**

(30) Priority: 08.01.2021 KR 20210002360
(71) Applicant: LG Energy Solution, Ltd., Seoul 07335 (KR)
(72) Inventor: KIM, Ilto, Daejeon 34122 (KR); LEE, Changhoon, Daejeon 34122 (KR)
(74) Representative: Goddar, Heinz J.
(86) International application number: PCT/KR2022/000313
(87) International publication number: WO 2022/149913

(57) **Abstract**

The present invention relates to a sulfur-carbon composite including a porous carbon material; and sulfur on at least a portion of an inside and a surface of the porous carbon material, wherein the porous carbon material has enhanced electrical conductivity through heat treatment, a method for preparing the same, and a lithium-sulfur battery including the same.

The sulfur-carbon composite according to the present invention has excellent electrochemical reactivity, which enables high capacity, high output, and long lifetime of a lithium-sulfur battery including the same.

## Description

### [Technical Field]

This application claims the benefits of priority based on Korean Patent Application No. 10-2021-0002360 filed on January 8, 2021, the entire contents of which are incorporated herein by reference.

The present invention relates to a sulfur-carbon composite, a method for preparing the same, and a lithium-sulfur battery including the same.

### [Background Art]

As the scope of application of lithium secondary batteries expands not only to portable electronic devices and communication devices, but also to electric vehicles (EV) and electric storage systems (ESS), demands for high capacity and high output of lithium secondary batteries used as a power source thereof have increased.

Among various lithium secondary batteries, a lithium-sulfur battery is a battery system using a sulfur series material including a sulfur-sulfur bond as a positive electrode active material, and using lithium metal, a carbonbased material having lithium ion intercalation/deintercalation, or silicon, tin or the like forming an alloy with lithium as a negative electrode active material.

Sulfur, a main material of a positive electrode active material in a lithium-sulfur battery has advantages of having a low atomic weight, being readily supplied by being abundant in resources, being inexpensive, having no toxicity and being environmental-friendly.

In addition, a lithium-sulfur battery has theoretical discharging capacity, which is obtained from a conversion reaction of lithium ions and sulfur (S₈+16Li⁺+16e⁻→8Li₂S) in a positive electrode, of up to 1,675 mAh/g, and, when using lithium metal (theoretical capacity: 3,860 mAh/g) as a negative electrode, has theoretical energy density of 2,600 Wh/kg. This is a very high number compared to theoretical energy density of other currently-studied battery systems (Ni-MH battery: 450 Wh/kg, Li-FeS battery: 480 Wh/kg, Li-MnO₂ battery: 1,000 Wh/kg, Na-S battery: 800 Wh/kg) and a lithium ion battery (250 Wh/kg), and therefore, high capacity, high output and high energy density are obtained, and a lithium-sulfur battery has received attention as an energy source of medium-to-large devices such as electric vehicles as well as portable electronic devices.

In a lithium-sulfur battery, sulfur used as a positive electrode active material is a nonconductor having no electrical conductivity with electrical conductivity of 5×10⁻³⁰ S/cm, and there is a problem in that electrons generated by an electrochemical reaction are difficult to migrate. Accordingly, sulfur is composited with a conductive material such as carbon capable of providing an electrochemical reaction site, and used as a sulfur-carbon composite.

However, in addition to an elution problem of lithium polysulfide (Li₂Sₓ, x=8, 6, 4, 2) produced during a charge and discharge process of a lithium-sulfur battery, there is a problem in that electrochemical reactivity of a sulfur-carbon composite, a positive electrode active material, decreases due to low electrical conductivity of sulfur that is a positive electrode active material and lithium sulfide (Li₂S) that is a discharged product thereof.

Due to such problems described above, capacity and output properties rapidly decline as a cycle progresses in a lithium-sulfur battery, which also decreases a lifetime as well, and commercialization has not been successful since it is difficult to secure sufficient performance and driving stability.

In view of the above, various techniques to improve electrochemical reactivity of a sulfur-carbon composite have been proposed.

As one example, Korean Laid-open Patent Application Publication No. 2016-0046775 discloses that, by providing a positive electrode coating layer formed with an amphiphilic polymer on a portion of a surface of a positive electrode active site including a sulfur-carbon composite, lithium polysulfide elution is suppressed and lithium ions readily migrate as well, which enhances cycle properties of a battery.

In addition, Korean Laid-open Patent Application Publication No. 2016-0037084 discloses that, by coating a sulfur-including carbon nanotube aggregate with graphene, melting out of lithium polysulfide is blocked, and conductivity of a sulfur-carbon nanotube composite and a loading amount of sulfur may increase.

In the sulfur-carbon composites provided in these patents, a problem of electrochemical reactivity decline in the sulfur-carbon composite has been improved to some extent through introducing a coating layer, however, these are difficult to be commercially used, and the effect of improving lithium-sulfur battery performance is not sufficient as well. Accordingly, development of a sulfur-carbon composite having excellent electrochemical reactivity through a simple process has been more required.

### [Prior Art Documents]

### [Patent Documents]

### Korean Laid-open Patent Application Publication No. 2016-0046775

### Korean Laid-open Patent Application Publication No. 2016-0037084

### [Disclosure]

### [Technical Problem]

As a result of extensive studies in view of the above, the inventors of the present invention have identified that electrical conductivity of a porous carbon material is improved when heat treating the porous carbon material under a certain condition and excellent electrochemical reactivity is obtained when introducing this to a sulfur-carbon composite, and have completed the present invention.

Accordingly, the present invention is directed to providing a sulfur-carbon composite having excellent electrochemical reactivity.

In addition, the present invention is also directed to providing a method for preparing the sulfur-carbon composite.

In addition, the present invention is also directed to providing a positive electrode including the sulfur-carbon composite, and a lithium-sulfur battery including the same.

### [Technical Solution]

To achieve the above objects, one embodiment of the present invention provides a sulfur-carbon composite including a porous carbon material; and sulfur on at least a portion of an inside and a surface of the porous carbon material, wherein the porous carbon material has powder electrical conductivity of 24.5 S/cm or greater at powder density of 0.58 g/cc.

In addition, one embodiment of the present invention provides a method for preparing a sulfur-carbon composite, including steps of (a) heat treating a porous carbon material under an inert gas atmosphere; and (b) compositing by mixing the heat-treated porous carbon material with sulfur.

In addition, one embodiment of the present invention provides a positive electrode for a lithium-sulfur battery including the sulfur-carbon composite.

Moreover, one embodiment of the present invention provides a lithium-sulfur battery including the positive electrode for a lithium-sulfur battery.

### [Advantageous Effects]

A sulfur-carbon composite according to the present invention exhibits excellent electrochemical reactivity by including a porous carbon material having electrical conductivity enhanced through heat treatment, and when using the sulfur-carbon composite as a positive electrode active material of a lithium-sulfur battery, an overvoltage can be improved, and capacity, output and lifetime properties can be enhanced in the battery.

### [Description of Drawings]

FIG. 1 is a graph showing results of measuring electrical conductivity of porous carbon materials of Examples 1 to 3, Example 6 and Comparative Example 1.
FIG. 2 is a graph showing results of measuring electrical conductivity of porous carbon materials of Examples 3 to 6 and Comparative Example 3.
FIG. 3 is a graph showing results of evaluating capacity properties of lithium-sulfur batteries of Examples 1 to 3, Example 6 and Comparative Example 1.
FIG. 4 is a graph showing results of evaluating lifetime properties of lithium-sulfur batteries of Examples 1 to 3, Example 6 and Comparative Example 1.
FIG. 5 is a graph showing results of evaluating output properties of lithium-sulfur batteries of Example 7 and Comparative Example 2.

### [Best Mode]

Hereinafter, the present invention will be described in more detail.

Terms or words used in the present specification and the claims are not to be interpreted limitedly to common or dictionary meanings, and shall be interpreted as meanings and concepts corresponding to technical ideas of the present invention based on a principle in which the inventors may suitably define the concepts of terms in order to describe the invention in the best possible way.

Terms used in the present invention are for describing specific embodiments only and do not intend to limit the present invention. Singular forms used herein include plural forms as well, unless the context clearly indicates otherwise. In the present invention, terms such as `include' or 'have' are to specify the presence of features, numbers, steps, behaviors, constituents, components or combinations thereof described in the specification, and need to be construed as not excluding in advance the possibility of presence or addition of one or more of other features, numbers, steps, behaviors, constituents, components or combinations thereof.

A term "composite" used in the present specification means a material combining two or more materials, and exhibiting more effective functions while forming physically and chemically different phases.

A term "polysulfide" used in the present specification is a concept including both "polysulfide ion (Sₓ²⁻, x=8, 6, 4, 2))" and "lithium polysulfide (Li₂Sₓ or LiSₓ⁻ x=8, 6, 4, 2)".

A term "powder density" used in the present specification means a weight per unit volume of a material to be measured made of a pellet, and means apparent density of a material to be measured.

A term "powder electrical conductivity" used the present specification means converting a sheet resistance value, which is measured after pelletizing a powder of a material to be measured, into electrical conductivity.

A lithium-sulfur battery has received attention as a next-generation secondary battery by, as well as having high discharging capacity and theoretical energy density, sulfur used as a positive electrode active material being abundant in resources and inexpensive lowering manufacturing costs of the battery, and being environmental-friendly.

Sulfur, a positive electrode active material in a lithium-sulfur battery, is a nonconductor, and is composited with carbon, a conductive material, in a sulfur-carbon composite form in order to supplement electrical conductivity.

However, due to elution of lithium polysulfide produced during charge and discharge, a lithium-sulfur battery has loss of sulfur participating in an electrochemical reaction, and by lithium sulfide, a reduced material of sulfur, having very low electrical conductivity, electrochemical reactivity of a sulfur-carbon composite, a positive electrode active material, decreases, and as a result, theoretical discharging capacity and theoretical energy density are not fully obtained in actual driving. In addition, approximately 80% of volume expansion occurs as sulfur changes into lithium sulfide, which reduces a pore volume inside a positive electrode making the contact with an electrolyte difficult, and there is a problem of further reducing electrochemical reactivity of the positive electrode active material.

In view of the above, methods such as increasing a loading amount of sulfur, varying a carbon material type, or introducing a coating layer for suppressing elution of lithium polysulfide have been proposed in the art, however, performance of a lithium-sulfur battery has not been effectively improved, and there has been a disadvantage of causing a serious problem in battery stability or being inefficient in terms of process as well.

Accordingly, the present invention provides a sulfur-carbon composite capable of obtaining a lithium-sulfur battery with enhanced capacity, output and lifetime properties by including a porous carbon material having electrical conductivity in a certain range as a sulfur carrier and thereby enhancing electrochemical reactivity of the sulfur-carbon composite.

Specifically, the sulfur-carbon composite according to the present invention includes a porous carbon material; and sulfur on at least a portion of an inside and a surface of the porous carbon material, wherein the porous carbon material has powder electrical conductivity of 24.5 S/cm or greater at powder density of 0.58 g/cc. Herein, the inside of the porous carbon material includes inside a pore of the porous carbon material.

Particularly, in the present invention, a porous carbon material having electrical conductivity in a certain range through heat treatment under an inert gas atmosphere is used as a sulfur carrier, and the sulfur-carbon composite of the present invention including such a heat-treated porous carbon material is capable of having excellent electrochemical reactivity by having enhanced electrical conductivity.

In other words, the porous carbon material of the sulfur-carbon composite according to the present invention is a porous carbon material having powder electrical conductivity of 24.5 S/cm or greater at powder density of 0.58 g/cc through heat treatment under an inert gas condition.

The porous carbon material gone through a heat treatment process included in the sulfur-carbon composite of the present invention is capable of resolving a problem of reducing electrochemical reactivity of a positive electrode active material caused by various factors occurring when charging and discharging a battery by the porous carbon material itself having electrical conductivity in a specific range as described above.

Accordingly, by introducing a porous carbon material having electrical conductivity in a certain range through heat treatment under an inert gas condition as a sulfur carrier in the present invention, electrochemical reactivity of the sulfur-carbon composite is improved, and therefore, excellent capacity, output and lifetime properties may be enhanced in a lithium-sulfur battery.

As the porous carbon material included in the sulfur-carbon composite according to the present invention, those capable of providing electrical conductivity while providing a skeleton uniformly and stably fixing sulfur, a nonconductor, and having electrical conductivity in a certain range through heat treatment under an inert gas condition are used.

Specifically, the porous carbon material of the present invention gone through heat treatment under an inert gas condition has powder electrical conductivity of 24.5 S/cm or greater at powder density of 0.58 g/cc, preferably has powder electrical conductivity of 24.625 S/cm or greater at powder density of 0.58 g/cc, more preferably has powder electrical conductivity of 25 S/cm or greater at powder density of 0.58 g/cc, and most preferably has powder electrical conductivity of 25.2 S/cm or greater at powder density of 0.58 g/cc. When the powder electrical conductivity is less than 24.5 S/cm in the above-described powder density range, the effect of improving electrochemical reactivity of the sulfur-carbon composite is insignificant.

As the porous carbon material, any material commonly used in the art may be used as long as it has a porous structure or has a high specific surface area. For example, the porous carbon material may be one or more types selected from the group consisting of graphene; carbon black such as denka black, acetylene black, Ketjen black, channel black, furnace black, lamp black or thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); graphite such as natural graphite, artificial graphite or expanded graphite, and activated carbon, but is not limited thereto. Preferably, the porous carbon material may be carbon black.

The porous carbon material may include a plurality of non-uniform pores on the surface and the inside. Herein, the pores have an average diameter in a range of 100 nm to 50 um, and the porosity may be in a 10 to 90% range of a total volume of the porous carbon material. When the average diameter of the pores is less than the above-mentioned range, the pore size is merely a molecular level making sulfur impregnation impossible, and when the average diameter excesses the above range on the contrary, the porous carbon material has weakened mechanical strength, which may cause problems of declining electrode durability and performance.

The porous carbon material may have an average diameter of 100 nm to 50 um, and preferably 10 to 50 um. The average diameter of the porous carbon material being less than the above-mentioned range may have a problem when loading sulfur in the carbon material pores, and when the average diameter excesses the above range on the contrary, the sulfur-carbon composite may have reduced conductivity.

The form of the porous carbon material may be a globular type, a rod type, a needle type, a plate type, a tube type or a bulk type, and may be used without limit as long as it is commonly used in a lithium-sulfur battery.

The sulfur-carbon composite according to the present invention includes sulfur together with the porous carbon material described above.

The sulfur may include one or more types selected from the group consisting of inorganic sulfur (S₈), Li₂Sₙ (n≥1), disulfide compounds, organosulfur compounds and carbon-sulfur polymers ((C₂Sₓ)ₙ, x=2.5 to 50, n≥2). Preferably, the sulfur may be inorganic sulfur.

In the sulfur-carbon composite according to the present invention, the sulfur is located on at least any one of the inside and the surface of the porous carbon material described above, and herein, may be present in a region of less than 100%, preferably 1% to 95% and more preferably 60% to 90% of the whole surface of the inside and the outside of the porous carbon material. When the sulfur is present on the inside and the outer surface of the porous carbon material in the above-mentioned range, maximum effects may be obtained in terms of electron transfer area and wettability with an electrolyte. Specifically, the sulfur is thinly and evenly impregnated on the inside and the outer surface of the porous carbon material in the above-mentioned range, and therefore, an electron transfer contact area may increase in a charge and discharge process. When the sulfur is located in a 100% region of the whole surface of the inside and the outside of the porous carbon material, the carbon material is completely covered with the sulfur reducing wettability for an electrolyte and reducing a contact with a conductor included in the electrode, and as a result, electrons are not transferred and participation in an electrochemical reaction becomes impossible.

In the present invention, as the sulfur, those having an average diameter in a range of 1 nm to 1 um and preferably 1 to 100 nm are used, and as a result, the sulfur may be coated to a thickness of 1 to 10 nm on the inside and the surface of the porous carbon material.

In the sulfur-carbon composite of the present invention, the porous carbon material may be included in 10 to 50% by weight, and preferably in 20 to 40% by weight based on a total weight of the sulfur-carbon composite.

In the sulfur-carbon composite of the present invention, the sulfur may be included in 50 to 90% by weight, and preferably in 60 to 80% by weight based on a total weight of the sulfur-carbon composite.

Accordingly, in the sulfur-carbon composite of the present invention, the porous carbon material and the sulfur may have a weight ratio of 1:1 to 1:9, and preferably 1:1.5 to 1:4.

When the sulfur content is less than the above-described range, the content of the porous carbon material relatively increases in the sulfur-carbon composite, which increases a specific surface area and increases a binder content when preparing slurry. Such an increase in the binder amount used resultantly increases sheet resistance of the positive electrode performing a role of an insulator preventing electron migration (electron pass), and battery performance may decline. When the sulfur content excesses the above range on the contrary, the sulfurs not bonding to the porous carbon material aggregate by themselves or are re-eluted to the surface of the porous carbon material making it difficult to receive electrons, and loss in the capacity of a battery may occur since participation in an electrochemical reaction becomes not possible.

The sulfur-carbon composite may be obtained by compositing the sulfur and the carbon material through simple mixing, or may have a coating form or loaded form of a core-shell structure. The coating form of a core-shell structure is any one of the sulfur or the carbon material coating the other material, and, for example, the carbon material surface may be wrapped with the sulfur, or vice versa. In addition, the loaded form may be a form in which the sulfur is loaded inside the carbon material. As the form of the sulfur-carbon composite, any form may be used as long as the content ratio of the sulfur series compound and the carbon material presented above is satisfied, and the form is not limited in the present invention.

The average diameter of the sulfur-carbon composite according to the present invention is not particularly limited and may vary, but is from 0.5 to 20 µm, and preferably from 1 to 15 µm. Satisfying the above-mentioned range has an advantage of preparing a high loading electrode.

The sulfur-carbon composite has a specific surface area of preferably 3 m²/g to 20 m²/g, and more preferably 5.5 m²/g to 15 m²/g. The specific surface area of the sulfur-carbon composite being less than 3 m²/g is not preferred in that the sulfur component is not evenly impregnated on the carbon material surface resulting in decline in the battery performance, and the specific surface area exceeding 20 m²/g is not preferred in that an added amount of binder increases when preparing an electrode.

The sulfur-carbon composite has a pore volume of preferably 0.075 cm³/g to 1 cm³/g, and more preferably 0.080 cm³/g to 1 cm³/g. The pore volume of the sulfur-carbon composite being less than 0.075 cm³/g is not preferred in that the sulfur component is not impregnated in the sulfur-carbon composite, and is either separately present on the surface or aggregated, and the pore volume exceeding 1 cm³/g is not preferred in that, although there is plenty of space for the sulfur component to be impregnated, the pores of the sulfurcomposite are not used making it difficult to prepare an electrode with high energy density.

In addition, the present invention provides a method for preparing the sulfur-carbon composite.

The method for preparing the sulfur-carbon composite according to the present invention includes steps of (a) heat treating a porous carbon material under an inert gas atmosphere; and (b) compositing by mixing the heat-treated porous carbon material with sulfur.

First, the step (a) is heat treating a porous carbon material under an inert gas atmosphere.

The porous carbon material used in the step (a) is the same as the porous carbon material described in the sulfur-carbon composite.

The inert gas may include one or more types selected from the group consisting of helium gas, nitrogen gas or argon gas. When considering the effect of improving electrical conductivity of the porous carbon material, the inert gas is preferably nitrogen gas or argon gas, and more preferably nitrogen gas.

The heat treatment in the step (a) may be conducted using common methods known in the art.

The heat treatment temperature in the step (a) may be in a range of 500°C to 850°C. By heat treating the porous carbon material at a temperature of 500°C to 850°C in the present invention, only electrical conductivity may be enhanced without producing a graphitization reaction of the porous carbon material. In other words, enhanced electrical conductivity may be obtained while compositions or other properties of the porous carbon material before the heat treatment are maintained as they are even after the heat treatment. The heat treatment temperature is preferably from 500°C to 800°C, and more preferably from 650°C to 800°C. When the heat treatment temperature is less than 500°C, the effect of improving electrical conductivity of the carbon material is insignificant, and the effect of improving electrochemical reactivity is insignificant. When the heat treatment temperature excesses 850°C on the contrary, the porous carbon material is graphitized causing damages on the porous carbon material.

The heat treatment in the step (a) may be conducted for 1 to 5 hours after raising the temperature to 500°C to 850°C at 5 to 10°C/min.

When the temperature raising rate is less than 5°C/min, other side reactions may occur, and the temperature raising rate exceeding 10°C/min is not suited since the heat treatment process may proceed at an excessive temperature.

In addition, when the heat treatment time is less than 1 hour, the reaction for improving electrical conductivity may not sufficiently proceed, and when the heat treatment time excesses 5 hours, other side reactions may occur.

Through the heat treatment, a porous carbon material having electrical conductivity in a certain range may be prepared.

Specifically, the porous carbon material obtained through the heat treatment has powder electrical conductivity of 24.5 S/cm or greater at powder density of 0.58 g/cc, preferably has powder electrical conductivity of 25 S/cm or greater at powder density of 0.58 g/cc, and most preferably has powder electrical conductivity of 25.2 S/cm or greater at powder density of 0.58 g/cc.

Then, the step (b) is a step of compositing by mixing the heat-treated porous carbon material with sulfur.

The sulfur used in the step (b) is the same as the sulfur described in the sulfur-carbon composite.

The mixing is for increasing the degree of mixing between the materials described above, and stirring devices commonly used in the art may be used. Herein, the mixing time and rate may also be selectively adjusted depending on the raw material content and the condition.

The method of compositing is not particularly limited in the present invention, and methods commonly used in the art may be used. As one example, methods commonly used in the art such as dry compositing or wet compositing such as spray coating may be used. As one example, a method of ball milling and pulverizing the mixture of the sulfur and the heat-treated porous carbon material, placing the result in a 120 to 160°C oven for 20 minutes to 1 hour, and having the melted sulfur being evenly coated on the inside and the outer surface of the heat-treated porous carbon material may be used.

The method for preparing the sulfur-carbon composite according to the present invention is readily used commercially as well as having a simple process, and has an advantage of preparing a sulfur-carbon composite with excellent electrochemical reactivity without using highpriced raw materials or constructing separate facilities. In addition, by including a porous carbon material having electrical conductivity in a certain range through heat treatment as a sulfur carrier, the sulfur-carbon composite obtained through the above-described preparation method is capable of improving performance of a lithium-sulfur battery by enhancing electrochemical reactivity of the sulfur-carbon composite (specifically, sulfur).

In addition, the present invention provides a positive electrode for a lithium-sulfur battery including the sulfur-carbon composite.

The positive electrode may include a positive electrode current collector, and a positive electrode active material layer coated on at least one surface of the positive electrode current collector.

The positive electrode active material layer may include the sulfur-carbon composite of the present invention described above as a positive electrode active material.

The positive electrode active material layer may further include, in addition to the positive electrode active material, one or more additives selected from among transition metal elements, group IIIA elements, group IVA elements, sulfur compounds of these elements, and alloys of these elements and sulfur.

As the transition metal element, Sc, Ti, V, Cr, Mn, Fe, Co, Ni, Cu, Zn, Y, Zr, Nb, Mo, Tc, Ru, Rh, Pd, Os, Ir, Pt, Au, Hg or the like may be included. As the group IIIA element, Al, Ga, In, Ti or the like may be included, and as the group IVA element, Ge, Sn, Pb or the like may be included.

The positive electrode active material layer may further include, together with the positive electrode active material, or optionally with additives, a conductor for electrons to smoothly migrate in the positive electrode and a binder for fully attaching the positive electrode active material to the current collector.

The conductor is a material electrically connecting an electrolyte and the positive electrode active material to perform a role of a path through which electrons migrate from the current collector to the positive electrode active material, and may be used without limit as long as it has conductivity.

For example, as the conductor, carbon black such as Super-P, denka black, acetylene black, Ketjen black, channel black, furnace black, lamp black, thermal black or carbon black; carbon derivatives such as carbon nanotubes or fullerene; conductive fibers such as carbon fiber or metal fibers; fluorocarbon, metal powders such as aluminum or nickel powder; or conductive polymers such as polyaniline, polythiophene, polyacetylene, or polypyrrole may be used either alone or as a mixture.

The conductor may be included in a content of 0.01 to 30% by weight based on a total weight of the mixture including the positive electrode active material.

The binder is for keeping the positive electrode active material on the positive electrode current collector, and organically linking the positive electrode active materials to further increase binding force between them, and all binders known in the art may be used.

Example of the binder may include one type selected from the group consisting of fluorine resin-based binders including polyvinylidene fluoride (PVdF) or polytetrafluoroethylene (PTFE); rubber-based binders including styrene butadiene rubber (SBR), acrylonitrile-butadiene rubber or styreneisoprene rubber; cellulose-based binders including carboxymethyl cellulose (CMC), starch, hydroxypropyl cellulose or regenerated cellulose; polyalcohol-based binders; polyolefin-based binders including polyethylene or polypropylene; polyimide-based binders; polyester-based binders; and silane-based binders, or mixtures or copolymers of two or more types thereof.

The binder may be included in 0.5 to 30% by weight based on a total weight of the mixture including the positive electrode active material. When the binder content is less than 0.5% by weight, physical properties of the positive electrode decline and the positive electrode active material and the conductor may be eliminated, and when the binder content excesses 30% by weight, the ratios of the active material and the conductor relatively decrease in the positive electrode, which may reduce battery capacity.

The positive electrode may be prepared using common methods known in the art.

For example, when specifically examining a method for preparing the positive electrode of the present invention, the binder is dissolved in a solvent for preparing slurry first, and then the conductor is dispersed thereinto. As the solvent for preparing the slurry, solvents capable of uniformly dispersing the positive electrode active material, the binder and the conductor, and readily evaporating are preferably used, and representative examples thereof may include acetonitrile, methanol, ethanol, tetrahydrofuran, water, isopropyl alcohol and the like. Then, the positive electrode active material, or optionally with additives, is uniformly dispersed into the conductor-dispersed solvent to prepare the slurry. The amounts of the solvent, the positive electrode active material, or optionally the additives included in the slurry are not particularly important in the present application, and it is sufficient when the slurry has proper viscosity so as to be readily coated.

The slurry prepared as above is coated on the positive electrode current collector, and vacuum dried to form the positive electrode active material layer, and as a result, the positive electrode is prepared. The slurry may be coated on the positive electrode current collector to a proper thickness depending on the slurry viscosity and the thickness of the positive electrode active material layer to form.

The positive electrode current collector may be generally made to a thickness of 3 to 500 µm, and is not particularly limited as long as it has high conductivity without inducing chemical changes to a battery.

For example, as the positive electrode current collector, copper, stainless steel, aluminum, nickel, titanium, palladium, baked carbon, or copper, stainless steel or aluminum of which surface is treated with carbon, nickel, silver or the like, aluminum-cadmium alloys or the like may be used.

The positive electrode current collector may strengthen binding strength with the positive electrode active material by forming micro unevenness on a surface thereof, and various forms such as films, sheets, foil, meshes, nets, porous bodies, foams, or non-woven fabrics may be used.

The coating may be conducted using methods commonly known in the art, and for example, methods such as doctor blade coating, dip coating, gravure coating, slit die coating, spin coating, comma coating, bar coating, reverse roll coating, screen coating, and cap coating may be included. In addition, the slurry may also be coated on the positive electrode current collector using a method of pressing or lamination after forming on a separate substrate.

After the coating, a drying process for removing the solvent may be conducted. The drying process is conducted under temperature and time at a level capable of sufficiently removing the solvent, and the condition is not particularly limited in the present invention since it may vary depending on the solvent type. As one example, a drying method of drying by warm air, hot air or low-humidity air, vacuum drying, irradiation of (far)infrared rays, electron beam and the like, may be included. The drying rate is usually adjusted so that the solvent is removed as quickly as possible in a rate range not to cause cracks on the positive electrode active material layer by stress concentration or not to peel off the positive electrode active material layer from the positive electrode current collector.

Additionally, density of the positive electrode active material in the positive electrode may also increase by pressing the current collector after the drying. As a method of the pressing, methods such as mold press and roll press may be included.

In addition, the present invention provides a lithium-sulfur battery including a positive electrode including the above-described sulfur-carbon composite; a negative electrode; and an electrolyte interposed between the positive electrode and the negative electrode.

The positive electrode is the positive electrode according to the present invention, and follows the descriptions provided above.

The negative electrode may be formed with a current collector, and a negative electrode active material layer formed on one surface or both surfaces thereof. Alternatively, the negative electrode may be a lithium metal plate.

The current collector is for supporting the negative electrode active material, and is as described in the positive electrode current collector.

As the negative electrode active material, materials capable of reversibly intercalating or deintercalating lithium (Li⁺), materials capable of reversibly forming a lithium-containing compound by reacting with lithium ions, lithium metal or lithium alloys may be included.

Examples of the material capable of reversibly intercalating or deintercalating lithium ions (Li⁺) may include crystalline carbon, amorphous carbon or a mixture thereof. Examples of the material capable of reversibly forming a lithium-containing compound by reacting with lithium ions (Li⁺) may include tin oxide, titanium nitrate or silicon. Examples of the lithium alloy may include alloys of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be lithium metal, and specifically, may have a lithium metal thin film or lithium metal powder form.

A method of forming the negative electrode active material layer is not particularly limited, and methods of forming a layer or film commonly used in the art may be used. For example, methods such as pressing, coating and deposition may be used. In addition, a case of assembling a battery without a lithium thin film in a current collector and then forming a metal lithium thin film on the metal plate by initial charge is also included in the negative electrode of the present invention.

A separator may be further included between the positive electrode and the negative electrode described above.

The separator separates or insulates the positive electrode and the negative electrode from each other, and enables lithium ion transfer between the positive electrode and the negative electrode, and may be formed with porous nonconductive or insulating materials. Such a separator may be an independent member such as a film, or a coating layer added to a positive electrode and/or a negative electrode.

As the separator, those having an excellent moisturecontaining ability for an electrolyte while having low resistance for ion migration of the electrolyte are preferred.

The separator may be formed with a porous base, and as the porous base, porous bases commonly used in a lithium-sulfur battery may all be used, and the porous polymer film may be used either alone or as a laminate thereof. For example, non-woven fabrics or polyolefin-based porous films made of high melting point glass fiber, polyethylene terephthalate and the like may be used, however, the separator is not limited thereto.

Materials of the porous base are not particularly limited in the present invention, porous bases commonly used in a lithium-sulfur battery may all be used. For example, the porous base may include one or more types of materials selected from the group consisting of polyolefins such as polyethylene and polypropylene, polyesters such as polyethylene terephthalate and polybutylene terephthalate, polyamide, polyacetal, polycarbonate, polyimide, polyetheretherketone, polyethersulfone, polyphenylene oxide, polyphenylene sulfide, polyethylene naphthalate, polytetrafluoroethylene, polyvinylidene fluoride, polyvinyl chloride, polyacrylonitrile, cellulose, nylon, poly(p-phenylene benzobisoxazole), and polyarylate.

A thickness of the porous base is not particularly limited, but may be from 1 to 100 um and preferably from 5 to 50 um. The porous base thickness range is not limited to the range described above, however, when the thickness is excessively thinner than the lower limit described above, mechanical properties decline, and the separator may be readily damaged during battery use.

Average diameter and porosity of the pores present in the porous base are not particularly limited as well, but may respectively be from 0.001 to 50 um and from 10 to 95%.

The electrolyte is for producing an electrochemical oxidation or reduction reaction in the positive electrode and the negative electrode therethrough, is located between the positive electrode and the negative electrode, and includes a lithium salt and a non-aqueous organic solvent.

The lithium salt may be used without limit as long as it may be commonly used in a lithium secondary battery.

Specific examples of the lithium salt may be one or more selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂ (lithium bis(trifluoromethanesulfonyl)imide; LiTFSI), LiN(C₂F₅SO₂)₂, LiN(SO₂F)₂ (lithium bis(fluorosulfonyl)imide; LiFSI), chloroborane lithium, lower aliphatic carboxylic acid lithium, lithium tetraphenylborate, and lithium imide.

The concentration of the lithium salt may be from 0.2 M to 4 M, specifically from 0.6 M to 2 M and more specifically from 0.7 M to 1.7 M depending on various factors such as a composition of the electrolyte, solubility of the lithium salt, conductivity of the dissolved lithium salt, charge and discharge conditions of a battery, a working temperature, and other factors known in the lithium secondary battery field. When the lithium salt concentration is used in less than 0.2 M, electrical conductivity of the electrolyte may decrease causing decline in the electrolyte performance, and when the lithium salt concentration is used in excess of 4 M, viscosity of the electrolyte increases leading to a decrease in the lithium ion mobility.

As the non-aqueous organic solvent, those commonly used in an electrolyte for a lithium secondary battery may be used without limit. For example, as the organic solvent, ethers, esters, amides, linear carbonates, cyclic carbonates and the like may be used either alone or as a mixture of two or more types. Among these, ether-based compounds are typically included.

Examples of the ether-based compound may include one or more types selected from the group consisting of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, 1,3-dioxolane, tetrahydrofuran and 2-methyltetrahydrofuran, however, the ether-based compound is not limited thereto.

Examples of the ester as the organic solvent may include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more types thereof, however, the ester is not limited thereto.

Specific examples of the linear carbonate compound may include any one selected from the group consisting of dimethyl carbonate (DMC), diethyl carbonate (DEC), dipropyl carbonate, ethyl methyl carbonate (EMC), methyl propyl carbonate and ethyl propyl carbonate, or a mixture of two or more types thereof, however, the linear carbonate compound is not limited thereto.

Specific examples of the cyclic carbonate compound may include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate and halides thereof, or a mixture of two or more types thereof. Examples of the halide thereof may include fluoroethylene carbonate (FEC) and the like, but are not limited thereto.

In addition, N-methylpyrrolidone, dimethyl sulfoxide, sulfolane and the like may be used in addition to the above-described organic solvent.

In addition to the above-described compositions, the electrolyte may further include a nitric acid-based compound commonly used in the art. Examples thereof may include lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂) and the like.

The electrolyte may be injected at a proper stage in an electrochemical device manufacturing process depending on a manufacturing process and required properties of a final product. In other words, the electrolyte may be used at a stage prior to assembling an electrochemical device or at a final stage of electrochemical device assembly.

The lithium-sulfur battery according to the present invention may go through lamination (stack) and folding processes of a separator and an electrode in addition to winding, a general process.

The lithium-sulfur battery of the present invention may be classified into a cylindrical-type, a prismatic-type, a coin-type, a pouch-type and the like depending on the shape, and may be divided into a bulk-type and a thin film-type depending on the size. Structures and manufacturing methods of these batteries are widely known in the art, and detailed descriptions thereon will not be included.

In addition, the present invention provides a battery module including the lithium-sulfur battery as a unit cell.

The battery module may be used as a power supply of medium to large-sized devices requiring high-temperature stability, long cycle properties and high capacity properties.

Examples of the medium to large-sized device may include power tools operated through receiving electric power by a battery motor; electric vehicles including electric vehicles (EV), hybrid electric vehicles (HEV), plug-in hybrid electric vehicles (PHEV) and the like; electric two-wheeled vehicles including electric bikes (E-bikes) and electric scooters (E-scooters); electric golf carts; electric storage systems, and the like, but are not limited thereto.

Hereinafter, preferred examples will be provided to help the understanding of the present invention. However, the following examples are for illustrative purposes only, and it will be obvious to those skilled in the art that various changes and modifications may be made within the category and technical ideas of the present invention, and it will also natural that such changes and modifications also fall within the scope of the attached claims.

### Example and Comparative Example

### [Example 1]

### (1) Preparation of Sulfur-Carbon Composite

10 g of Ketjen black (ECP600JD, Lion company) was heat treated for 3 hours at 500°C (temperature raising rate: 5°C/min) under the argon gas atmosphere.

The heat treated Ketjen black and sulfur were mixed in a weight ratio of 25:75, and then reacted for 35 minutes at a temperature of 155°C to prepare a sulfur-carbon composite in which the sulfur is loaded on the inside (pore) and the surface of the heat treated Ketjen black.

### (2) Manufacture of Lithium-Sulfur Battery

90% by weight of the sulfur-carbon composite prepared above, 5% by weight of denka black as a conductor, and 5% by weight of styrene-butadiene rubber/carboxymethyl cellulose (SBR:CMC=7:3, weight ratio) as a binder were mixed to prepare a positive electrode slurry composition.

The positive electrode slurry composition prepared as above was coated to a thickness of 150 um on aluminum foil having a thickness of 20 µm, and dried for 12 hours at 50°C to prepare a positive electrode.

The prepared positive electrode and a lithium metal negative electrode having a thickness of 45 um were placed to face each other, and after interposing a separator therebetween, 70 µl of an electrolyte was injected to manufacture a coin cell-type lithium-sulfur battery. Herein, polyethylene having a thickness of 20 um and porosity of 45% was used as the separator, and as the electrolyte, a mixture solution obtained by dissolving LiFSI having a concentration of 0.75 M and 5% by weight of lithium nitrate in an organic solvent formed with 1,3-dioxolane and dimethyl ether (DOL:DME=1:1 (volume ratio)) was used.

### [Example 2]

A lithium-sulfur battery was manufactured in the same manner as in Example 1 except that, when preparing the sulfur-carbon composite, Ketjen black was heat treated for 3 hours at 800°C (temperature raising rate: 5°C/min) under the argon gas atmosphere.

### [Example 3]

A lithium-sulfur battery was manufactured in the same manner as in Example 1 except that, when preparing the sulfur-carbon composite, Ketjen black was heat treated for 3 hours at 500°C (temperature raising rate: 5°C/min) under the nitrogen gas atmosphere.

### [Example 4]

A lithium-sulfur battery was manufactured in the same manner as in Example 1 above except that, when preparing the sulfur-carbon composite, Ketjen black was heat treated for 3 hours at 600°C (temperature raising rate: 5°C/min) under the nitrogen gas atmosphere.

### [Example 5]

A lithium-sulfur battery was manufactured in the same manner as in Example 1 except that, when preparing the sulfur-carbon composite, Ketjen black was heat treated for 3 hours at 700°C (temperature raising rate: 5°C/min) under the nitrogen gas atmosphere.

### [Example 6]

A lithium-sulfur battery was manufactured in the same manner as in Example 1 except that, when preparing the sulfur-carbon composite, Ketjen black was heat treated for 3 hours at 800°C (temperature raising rate: 5°C/min) under the nitrogen gas atmosphere.

### [Example 7]

A pouch-type lithium-sulfur battery was manufactured using Ketjen black heat treated for 3 hours at 800°C (temperature raising rate: 5°C/min) under the nitrogen gas atmosphere when preparing a sulfur-carbon composite, and using the positive electrode, the negative electrode, the electrolyte and the separator used in Example 1.

### [Comparative Example 1]

A lithium-sulfur battery was manufactured in the same manner as in Example 1 except that, when preparing the sulfur-carbon composite, pure Ketjen black with no heat treatment was used.

### [Comparative Example 2]

A pouch-type lithium-sulfur battery was manufactured using pure Ketjen black with no heat treatment when preparing a sulfur-carbon composite, and using the positive electrode, the negative electrode, the electrolyte, and the separator used in Example 1.

### [Comparative Example 3]

A lithium-sulfur battery was manufactured in the same manner as in Example 1 above except that, when preparing the sulfur-carbon composite, Ketjen black was heat treated for 3 hours at 900°C (temperature raising rate: 5°C/min) under the nitrogen gas atmosphere.

### Experimental Example 1. Elemental Analysis

For the heat treated Ketjen black prepared in each of Examples 1 to 3 and 6 and the pure Ketjen black with no heat treatment used in Comparative Example 1, an elemental analysis (EA) was conducted. After connecting oxygen gas, the furnace temperature was set to 900°C and the oven temperature was set to 65°C, and the contents of carbon (C), hydrogen (H), and nitrogen (N) were analyzed. After that, helium (He) gas was connected, then the furnace temperature was set to 1060°C and the oven temperature was set to 65°C, and the content of oxygen (O) was analyzed. The results are shown in Table 1.

**[Table 1]**

| Analyzed Element (% by Weight) | Example 1 | Example 2 | Example 3 | Example 6 | Comparative Example 1 |
|---|---|---|---|---|---|
| Carbon | 98.3 | 98.3 | 98.2 | 97.7 | 98.4 |
| Hydrogen | <1 | <1 | <1 | <1 | <1 |
| Oxygen | <1 | <1 | <1 | <1 | <1 |
| Nitrogen | <1 | <1 | <1 | <1 | <1 |

As shown in Table 1, it is identified that the carbon content of the Ketjen black of Examples 1 to 3 and 6 gone through the heat treatment process is similar within the margin of error compared to the pure Ketjen black of Comparative Example 1 without the heat treatment process. In addition, the contents of hydrogen, oxygen and nitrogen are also within 1% by weight, and it is seen that there is no change caused by the heat treatment.

From such results, it is identified that there is no change in the composition of the Ketjen black caused by the heat treatment according to the present invention.

### Experimental Example 2. Measurement of Electrical Conductivity

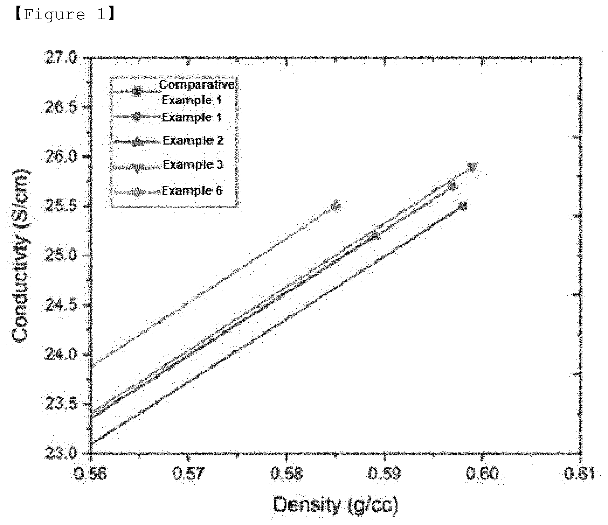

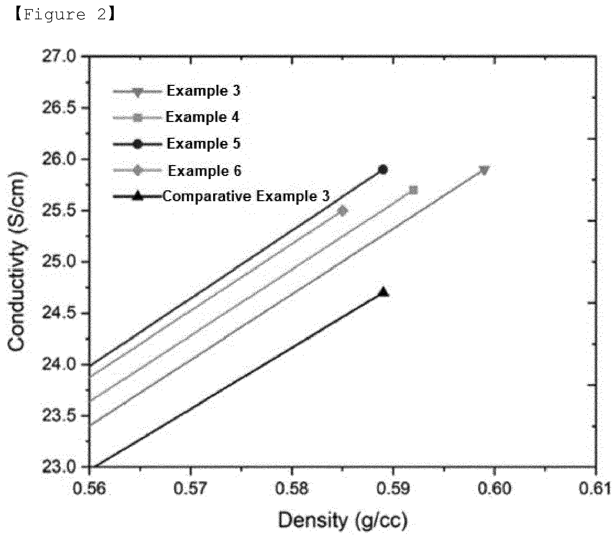

For the heat treated Ketjen black prepared in each of Examples 1 to 6 and Comparative Example 3 and the pure Ketjen black with no heat treatment used in Comparative Example 1, electrical conductivity was measured. Specifically, a sheet resistance value measured after preparing a powder of the material to be measured to a pellet was converted to electrical conductivity and the electrical conductivity was measured, and herein, a powder resistivity measurement system (HPRM-FA2) of Hantech company was used in the measurement. The measurement results are shown in FIG. 1 and FIG. 2.

When referring to FIG. 1 and FIG. 2, it is identified that the Ketjen black according to Examples 1 to 6 has enhanced electrical conductivity compared to the Ketjen black according to Comparative Examples 1 and 3.

Specifically, it is seen that, whereas the Ketjen black of Examples 1 to 6 heat treated in a temperature range of 500°C to 850°C has improved electrical conductivity compared to the pure Ketjen black with no heat treatment of Comparative Example 1, the Ketjen black of Comparative Example 3 heat treated at a temperature of 900°C has reduced electrical conductivity, and has even lower electrical conductivity compared to the pure Ketjen black of Comparative Example 1.

Accordingly, it is identified that electrical conductivity of the porous carbon material is enhanced when conducting heat treatment in a temperature range specified in the present invention.

### Experimental Example 3. Evaluation on Battery Performance

For the battery manufactured in each of Examples 1 to 3, Example 6, and Comparative Example 1, capacity and lifetime properties were evaluated using a charge and discharge measurement device of PNE Solution company.

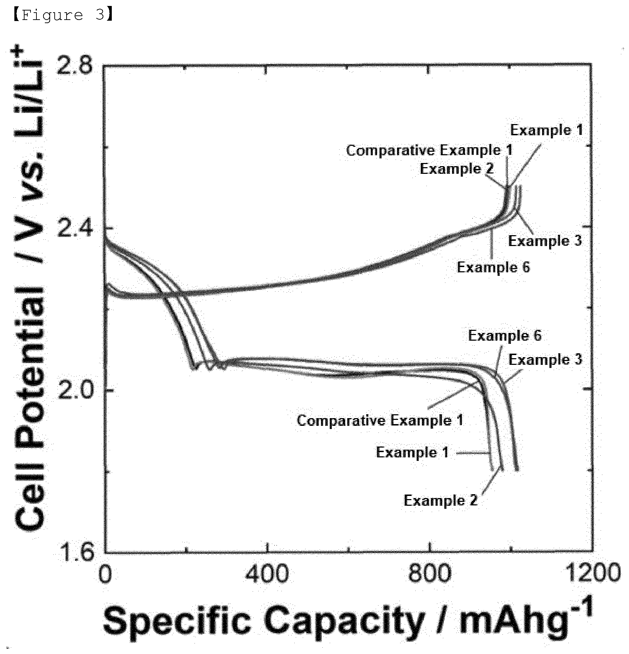

Specifically, capacity properties of the battery were evaluated while charging and discharging with current density of 0.1 C at 25°C. The results obtained herein are shown in FIG. 3.

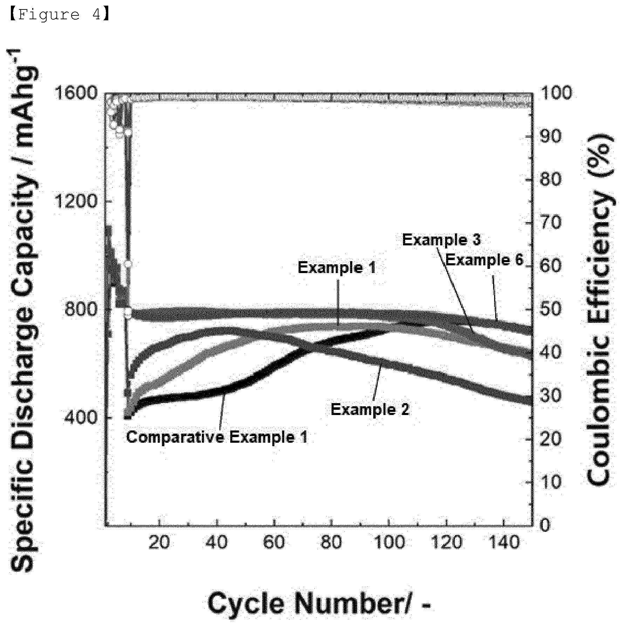

In addition, lifetime properties of the battery were evaluated while repeating charging and discharging three times with current density of 0.1 C at 25°C, then charging and discharging three times with current density of 0.2 C, and charging with current density of 0.3 C and discharging with current density of 0.5 C. The results obtained herein are shown in FIG. 4.

As shown in FIG. 3 and FIG. 4, it is identified that the batteries according to the examples have superior capacity and lifetime properties compared to the batteries of the comparative examples.

Specifically, it is seen that Examples 3 and 6 including Ketjen black heat treated under the nitrogen gas condition have significantly improved overvoltage and thereby have increased discharging capacity compared to Examples 1 and 2 including Ketjen black heat treated under the argon gas condition.

In addition, it is seen that the batteries of Examples 1 to 3 have superior initial discharging capacity in a high rate (0.5 C) discharging section compared to the battery of Comparative Example 1.

In addition thereto, it is identified that Examples 3 and 6 including Ketjen black heat treated under the nitrogen gas condition have a superior capacity retention rate and thereby have improved lifetime properties compared to Examples 1 and 2 and Comparative Example 1.

### Experimental Example 4. Evaluation on Battery Output Properties

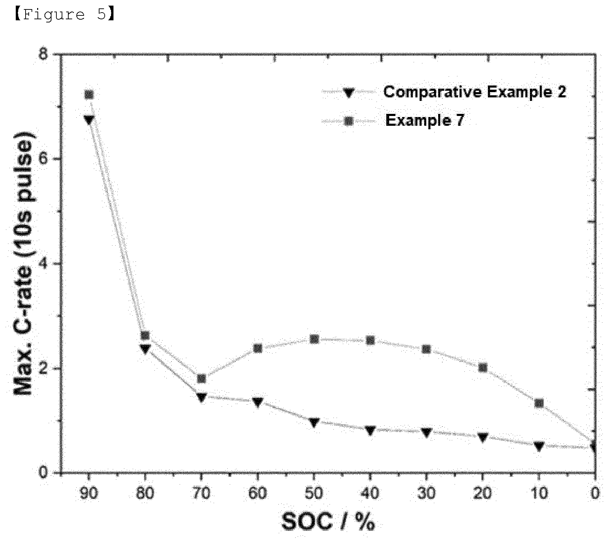

For the battery manufactured in each of Example 7 and Comparative Example 2, output properties of the battery were evaluated using a HPPC (hybrid pulse power characterization) method. The results obtained herein are shown in FIG. 5.

As shown in FIG. 5, it is identified that the battery according to Example 7 exhibits a higher maximum discharge rate near 70% of SOC (state of charge) compared to the battery according to Comparative Example 2.

In addition, whereas output properties of the battery of Comparative Example 2 tend to continuously decrease as SOC decreases, the battery of Example 7 has higher maximum discharge rate in the entire SOC section compared to the battery of Comparative Example 2, and tends to have a maximum discharge rate decreasing near 70% of SOC and then increasing again to near 40% of SOC.

From such results, it is seen that the battery according to the present invention has enhanced electrochemical reactivity by the sulfur-carbon composite, a positive electrode active material, including a heat-treated porous carbon material, and which improves output properties of the lithium-sulfur battery.

## Claims

1. A sulfur-carbon composite comprising:
a porous carbon material; and
sulfur on at least a portion of an inside and a surface of the porous carbon material,
wherein the porous carbon material has powder electrical conductivity of 24.5 S/cm or greater at powder density of 0.58 g/cc.

2. The sulfur-carbon composite of claim 1, wherein the porous carbon material has powder electrical conductivity of 25 S/cm or greater at powder density of 0.58 g/cc.

3. The sulfur-carbon composite of claim 1, wherein the porous carbon material includes one or more types selected from the group consisting of graphite, graphene, carbon black, carbon nanotubes, carbon fibers, and activated carbon.

4. The sulfur-carbon composite of claim 1, wherein the sulfur includes one or more types selected from the group consisting of inorganic sulfur , Li₂Sₙ (n≥1), disulfide compounds, organosulfur compounds, and carbon-sulfur polymers ((C₂Sₓ)ₙ, x=2.5 to 50, n≥2).

5. The sulfur-carbon composite of claim 1, wherein, in the sulfur-carbon composite, the porous carbon material and the sulfur have a weight ratio of 1:1 to 1:9.

6. A method for preparing a sulfur-carbon composite, comprising the steps of:
(a) heat treating a porous carbon material under an inert gas atmosphere; and
(b) compositing by mixing the heat-treated porous carbon material with sulfur.

7. The method for preparing a sulfur-carbon composite of claim 6, wherein the heat treating in step (a) is conducted in a temperature range of 500 to 850°C.

8. The method for preparing a sulfur-carbon composite of claim 6, wherein a temperature raising rate is from 5 to 10°C/min in the heat treating in step (a).

9. The method for preparing a sulfur-carbon composite of claim 6, wherein the heat treating in step (a) is conducted for 1 to 5 hours.

10. The method for preparing a sulfur-carbon composite of claim 6, wherein the inert gas includes one or more types selected from the group consisting of helium gas, nitrogen gas, and argon gas.

11. The method for preparing a sulfur-carbon composite of claim 6, wherein the inert gas includes nitrogen gas.

12. A positive electrode for a lithium-sulfur battery comprising the sulfur-carbon composite of claim 1.

13. A lithium-sulfur battery comprising:
the positive electrode for a lithium-sulfur battery of claim 12;
a negative electrode including a negative electrode active material; and
an electrolyte.

14. The lithium-sulfur battery of claim 13, wherein the negative electrode active material includes one or more types selected from the group consisting of lithium metal and lithium alloys.
